# EUROPEAN PATENT APPLICATION

(11) **EP 4 837 470 A1**
(43) Date of publication of application: **11.11.2026**
(21) Application number: 26176206.6
(22) Date of filing: 04.05.2026
(51) Int. Cl.: A47J 37/06

(54) **STEAM AIR FRYER**

(30) Priority: 05.05.2025 CN 202520868914 U; 17.06.2025 CN 202521243702 U
(71) Applicant: Ningbo Careline Electric Appliance Co., Ltd., Ningbo, Zhejiang 315000 (CN)
(72) Inventor: ZHANG, Yichi, Ningbo City, 315000 (CN); BAI, Rongjie, Ningbo City, 315000 (CN); XIE, Zhuhong, Ningbo City, 315000 (CN)
(74) Representative: Meyer-Dulheuer MD Legal Patentanwälte PartG mbB

(57) **Abstract**

The present disclosure relates to a steam air fryer, comprising a body, a cooking cavity arranged in the body, and a hot air circulation system communicating with the cooking cavity, a fry basket with an open top is detachably arranged in the cooking cavity, a flange folded outward is arranged at the periphery of the open top of the fry basket, an air duct plate is arranged at the top of the cooking cavity, a sealing member corresponding to the flange is arranged at the periphery of the air duct plate, and the sealing member is provided with a first sealing lip and a second sealing lip which extend downward and are in sealing fit with the flange. By arranging the sealing member with the first sealing lip and the second sealing lip at the periphery of the air duct plate, double sealing between the air duct plate and the fry basket can be achieved, the cooking efficiency and cooking effect of the air fryer are effectively ensured, and friction between the sealing member and the flange can also be reduced, making it easier for users to disassemble and install the fry basket and effectively improving the user experience.

## Description

### CROSS REFERENCE TO RELATED APPLICATIONS

The present disclosure claims priorities to the Chinese patent application No. 202521243702.2 filed to the China Patent Office on June 17, 2025 and entitled "Air Fryer with Good Sealing Performance", and the Chinese patent application No. 202520868914.3 filed to the China Patent Office on May 5, 2025 and entitled "Steam Air Fryer", the entire contents of which are incorporated herein by reference.

### TECHNICAL FIELD

The present disclosure relates to the technical field of kitchen household appliances and cooking appliances, in particular to a steam air fryer.

### BACKGROUND

In traditional air fryers, there is a gap between the fry basket and the air duct plate of most air fryers. Although such a gap can reduce friction between the fry basket and the air duct plate, making the fry basket easier to pull and push, during food cooking, it not only easily causes water vapor generated during the cooking of food in the fry basket to flow out to the bottom of the cooking cavity through the gap under the action of wind pressure to form condensed water, but also easily causes high-temperature steam to leak out of the fry basket through the gap when the air fryer performs steam cooking, thereby affecting the cooking efficiency and cooking effect of food in the fry basket and resulting in a poor user experience.

### SUMMARY

The present invention provides a steam air fryer, comprising a body, a cooking cavity disposed in the body and open at a side, and a hot air circulation system communicating with the cooking cavity, wherein a fry basket with an open top is detachably arranged in the cooking cavity, a flange folded outward is arranged at the periphery of the open top of the fry basket, guide grooves extending toward the side opening are arranged on two side walls of the cooking cavity, and the fry basket is suitable for being suspended in the guide grooves through the flange; an air duct plate is arranged at the top of the cooking cavity, a sealing member corresponding to the flange is arranged at the periphery of the air duct plate, the sealing member is provided with a first sealing lip extending downward and a second sealing lip extending downward, the first sealing lip and the second sealing lip are arranged side by side and at an interval, and the first sealing lip and the second sealing lip are suitable for being in sealing fit with the flange.

In one or more embodiments, the sealing member comprising a main body part, an upper movement fixedly connected with the air duct plate is arranged above the air duct plate, and the main body part is suitable for being clamped between the air duct plate and the upper movement.

In one or more embodiments, an installation groove matching the thickness of the air duct plate is arranged on the main body part, the main body part is suitable for being sleeved on the periphery of the air duct plate through the installation groove, and a part of the outer wall of the installation groove is clamped between the air duct plate and the upper movement.

In one or more embodiments, a limiting groove corresponding to the main body part is arranged on the upper movement, and at least part of the main body part is limited in the limiting groove.

In one or more embodiments, the sealing member comprising a connecting part, a connecting hole is arranged on the connecting part, a fixing hole corresponding to the connecting hole is arranged on the upper movement, and a fastener is limited in the connecting hole and the fixing hole.

In one or more embodiments, a lower movement matching the upper movement is arranged below the upper movement, the sealing member comprising a connecting part, and at least part of the connecting part is clamped between the upper movement and the lower movement.

In one or more embodiments, a step part corresponding to the connecting part is arranged on the lower movement, a protruding part corresponding to the step part is arranged on the upper movement, and the protruding part is suitable for abutting against the step part through the connecting part.

In one or more embodiments, a viewing window communicating with the cooking cavity is arranged on the air duct plate, a visual component for closing the viewing window is arranged at the viewing window, and the viewing window is suitable for at least partially corresponding to the open top of the fry basket.

In one or more embodiments, a hot air cavity with a downward opening formed by an upward depression of the air duct plate is arranged at the top of the cooking cavity, the hot air circulation system is arranged in the hot air cavity, and the downward opening of the hot air cavity is suitable for at least partially corresponding to the open top of the fry basket.

In one or more embodiments, a steam system communicating with the cooking cavity is arranged in the body, the steam system comprising a steam nozzle, the steam nozzle is fixed on the air duct plate and extends into the cooking cavity, and the steam nozzle is suitable for being arranged toward the middle of the cooking cavity.

In one or more embodiments, further comprising a steam system communicating with the cooking cavity, wherein a gap h is formed between at least one of the first sealing lip and the second sealing lip and the flange, satisfying 0.2mm ≤ h ≤ 1mm.

In one or more embodiments, the second sealing lip is located on the inner side of the first sealing lip, a gap L is formed between the first sealing lip and the flange, a gap h is formed between the second sealing lip and the flange, satisfying 0mm < L < h.

In one or more embodiments, the second sealing lip is located on the inner side of the first sealing lip, the first sealing lip is suitable for abutting against the flange, and a gap h is formed between the second sealing lip and the flange.

In one or more embodiments, the gap h between the second sealing lip and the flange is 0.4mm - 0.6mm.

In one or more embodiments, a water storage tank is suitable for being formed among the first sealing lip, the second sealing lip and the flange, and a communication port communicating with the inner cavity of the fry basket is arranged at the bottom of the water storage tank.

### BRIEF DESCRIPTION OF THE DRAWINGS

In order to describe technical solutions in specific implementations of the present disclosure or in the prior art more clearly, the accompanying drawings that need to be used in the description of the specific implementations or the prior art will be briefly introduced below. Apparently, the accompanying drawings in the following description are some implementations of the present disclosure, and for those of ordinary skill in the art, on the premise of no creative labor, other accompanying drawings may also be obtained from these accompanying drawings.
FIG. 1 is an overall sectional view of a first embodiment of the steam air fryer of the present disclosure;
FIG. 2 is a schematic view of an air duct plate of the first embodiment of the steam air fryer of the present disclosure;
FIG. 3 is a partial enlarged view of area A in FIG. 1;
FIG. 4 is an overall schematic view of a second embodiment of the steam air fryer of the present disclosure;
FIG. 5 is an overall sectional view of the second embodiment of the steam air fryer of the present disclosure;
FIG. 6 is a schematic view of the internal structure of the second embodiment of the steam air fryer of the present disclosure;
FIG. 7 is a schematic view of a partial structure of the second embodiment of the steam air fryer of the present disclosure;
FIG. 8 is a sectional view of a partial structure of the second embodiment of the steam air fryer of the present disclosure.

### DETAILED DESCRIPTION

In order to make the objectives, technical solutions and advantages of the embodiments of the present disclosure clearer, the technical solutions in the embodiments of the present disclosure will be clearly and completely described below in conjunction with the accompanying drawings in the embodiments of the present disclosure. Obviously, the described embodiments are some embodiments of the present disclosure, rather than all embodiments. The components of the embodiments of the present disclosure described and shown in the drawings herein can be arranged and designed in various different configurations.

Therefore, the following description of the embodiments of the present disclosure provided in the drawings is not intended to limit the scope of the claimed present disclosure, but only represents the selected embodiments of the present disclosure. Based on the embodiments in the present disclosure, all other embodiments obtained by those of ordinary skill in the art without creative work shall fall within the protection scope of the present disclosure.

### Embodiment 1:

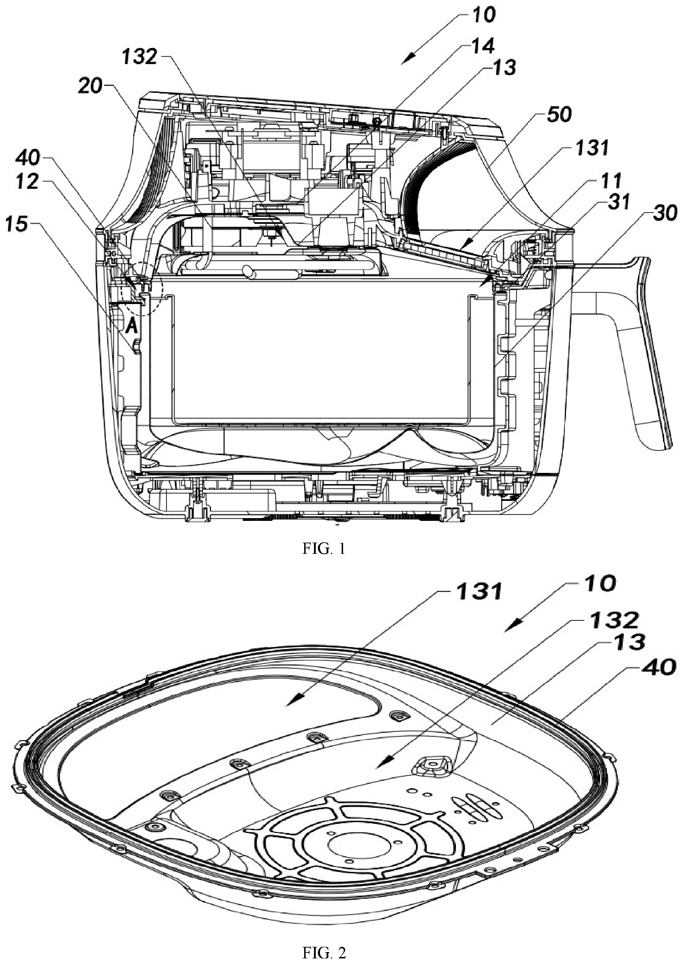

As shown in FIG. 1 to FIG. 3, which are schematic views of a first embodiment of the steam air fryer provided by the present application, the air fryer comprising a body 10, an cooking cavity 11 arranged at the inner side of the body 10, and a hot air circulation system 20 communicating with the cooking cavity 11. A fry basket 30 with an open top is detachably arranged in the cooking cavity 11, a flange 31 folded outward is arranged at the periphery of the open top of the fry basket 30, guide grooves 12 extending toward the side opening are arranged on two side walls of the cooking cavity 11, and the fry basket 30 is suitable for being suspended in the guide grooves 12 through the flange 31; an air duct plate 13 is arranged at the top of the cooking cavity 11, a sealing member 40 corresponding to the flange 31 and made of elastic high-temperature resistant materials such as rubber and silica gel is arranged at the periphery of the air duct plate 13, the sealing member 40 is provided with a first sealing lip 41 and a second sealing lip 42 extending downward, the first sealing lip 41 and the second sealing lip 42 are suitable for being arranged side by side and at an interval, and the first sealing lip 41 and the second sealing lip 42 are suitable for being in sealing fit with the flange 31 after extending. By arranging the sealing member 40 corresponding to the flange 31 at the periphery of the air duct plate 13 and arranging the first sealing lip 41 and the second sealing lip 42 on the sealing member 40 to be in sealing fit with the flange 31, double sealing between the air duct plate 13 and the fry basket 30 can be achieved, high-temperature water vapor in the fry basket 30 can be effectively prevented from leaking out, thereby ensuring the cooking efficiency and cooking effect of the air fryer, and friction between the sealing member 40 and the flange 31 can also be reduced, making it easier for users to disassemble and install the fry basket 30 and effectively improving the user experience; meanwhile, by arranging the guide grooves 12 on the two side walls of the cooking cavity 11, the installation of the fry basket 30 can be guided to reduce the installation difficulty of the fry basket 30 and effectively improve the user experience, and the fry basket 30 can also be limited, so that the flange 31 of the fry basket 30 can be better in sealing fit with the first sealing lip 41 and the second sealing lip 42 of the sealing member 40, the sealing effect between the sealing member 40 and the flange 31 is effectively ensured, and thus the cooking efficiency and cooking effect of the air fryer are improved.

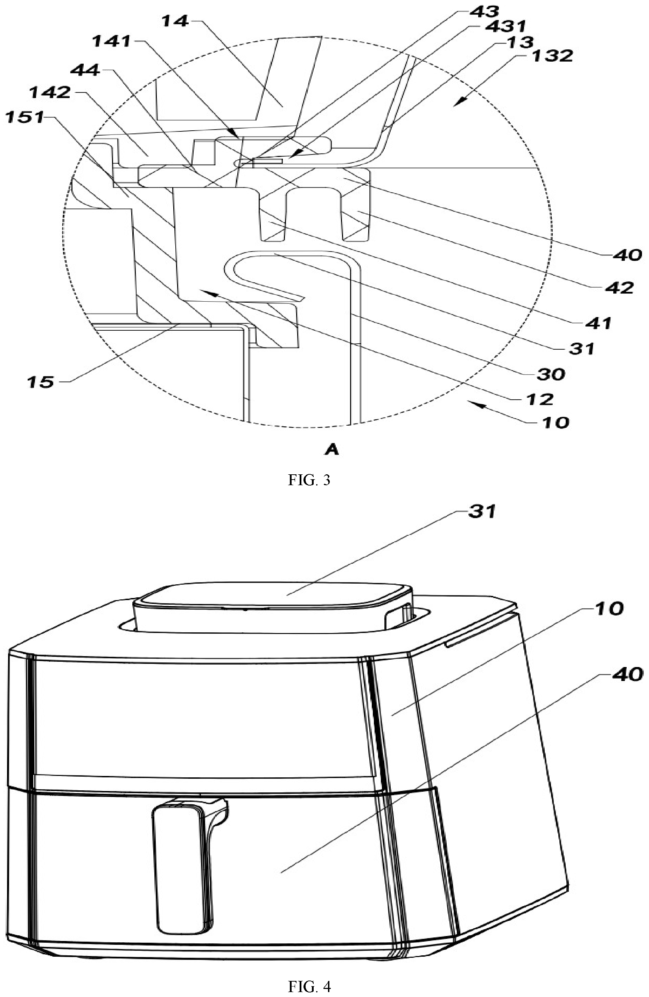

As shown in FIG. 3, the sealing member 40 comprising a main body part 43, an upper movement 14 fixedly connected with the air duct plate 13 is arranged above the air duct plate 13, and the main body part 43 is suitable for being clamped between the air duct plate 13 and the upper movement 14. By clamping the main body part 43 of the sealing member 40 between the air duct plate 13 and the upper movement 14, the installation structure of the sealing member 40 can be simplified, thereby reducing the production cost and user use cost of the air fryer, and the sealed connection between the air duct plate 13 and the upper movement 14 can also be achieved, preventing high-temperature hot air flow, water vapor and the like in the cooking cavity 11 from flowing out of the cooking cavity 11 through the connecting gap, thus avoiding affecting the normal operation of other electrical components outside the cooking cavity 11 and effectively improving the performance stability and use safety of the air fryer.

As shown in FIG. 3, an installation groove 431 matching the thickness of the air duct plate 13 is arranged on the main body part 43, the main body part 43 is suitable for being sleeved on the periphery of the air duct plate 13 through the installation groove 431, and a part of the outer wall of the installation groove 431 is suitable for being clamped between the air duct plate 13 and the upper movement 14. The installation groove 431 is suitable for positioning the installation of the sealing member 40, and the installation difficulty of the sealing member 40 can be effectively reduced by positioning the installation of the sealing member 40 through the installation groove 431; meanwhile, the installation groove 431 is suitable for limiting the installation of the sealing member 40, and the random sliding of the sealing member 40 during installation, which leads to poor sealing effect or sealing failure, can be avoided by limiting the installation of the sealing member 40 through the installation groove 431, effectively improving the sealing stability of the sealing member 40; in addition, by clamping a part of the outer wall of the installation groove 431 between the air duct plate 13 and the upper movement 14, the sealed connection between the air duct plate 13 and the upper movement 14 can also be achieved, preventing high-temperature hot air flow, water vapor and the like in the cooking cavity 11 from flowing out of the cooking cavity 11 through the connecting gap, thus avoiding affecting the normal operation of other electrical components outside the cooking cavity 11 and effectively improving the performance stability and use safety of the air fryer.

As shown in FIG. 3, a limiting groove 141 corresponding to the main body part 43 is arranged on the upper movement 14, and at least part of the main body part is limited in the limiting groove 141. The limiting groove 141 is suitable for limiting the sealing member 40. By limiting the sealing member 40 through the limiting groove 141, the random sliding of the sealing member 40 during installation, which leads to poor sealing effect or sealing failure, can be avoided, effectively ensuring the sealing stability and sealing effect of the sealing member 40.

As shown in FIG. 3, the sealing member 40 comprising a connecting part 44, a connecting hole is arranged on the connecting part, a fixing hole corresponding to the connecting hole is arranged on the upper movement 14, and a fastener is limited in the connecting hole and the fixing hole. The connecting hole and the fixing hole are suitable for positioning and/or limiting the installation of the sealing member 40. By arranging the connecting hole on the sealing member 40 to connect the sealing member 40 and the upper movement 14, the installation difficulty of the sealing member 40 can be reduced, thereby reducing the production cost and user use cost, and the connection stability of the sealing member 40 can also be ensured, avoiding the falling off and failure of the sealing member 40 when the fry basket 30 is pulled and pushed, and effectively ensuring the sealing stability of the sealing member 40.

As shown in FIG. 1 and FIG. 3, a lower movement 15 matching the upper movement 14 is arranged below the upper movement 14, and at least part of the connecting part 44 of the sealing member 40 is clamped between the upper movement 14 and the lower movement 15. By clamping the connecting part 44 between the upper movement 14 and the lower movement 15, the sealed connection between the upper movement 14 and the lower movement 15 can be achieved, preventing high-temperature hot air flow, water vapor and the like in the cooking cavity 11 from flowing out of the cooking cavity 11 through the connecting gap, thus avoiding affecting the normal operation of other electrical components outside the cooking cavity 11 and effectively improving the performance stability and use safety of the air fryer.

As shown in FIG. 3, a step part 151 corresponding to the connecting part 44 is arranged on the lower movement 15, a protruding part 142 corresponding to the step part 151 is arranged on the upper movement 14, and the protruding part 142 is suitable for abutting against the step part 151 through the connecting part 44. By arranging the step part 151 and the protruding part 142 on the lower movement 15 and the upper movement 14 respectively, and clamping the connecting part 44 between the step part 151 and the protruding part 142, the lower movement 15 can be better matched with the upper movement 14, the connection stability of the upper movement 14 and the lower movement 15 is effectively ensured, thereby ensuring the performance stability of the air fryer, and the connecting part 44 can also be better matched with the upper movement 14 and the lower movement 15, thus ensuring the sealing stability of the upper movement 14 and the lower movement 15.

As shown in FIG. 1 and FIG. 2, a viewing window 131 communicating with the cooking cavity 11 is arranged on the air duct plate 13, a visual component 50 for closing the viewing window 131 is arranged at the viewing window 131, and the viewing window 131 is suitable for at least partially corresponding to the open top of the fry basket 30. By arranging the viewing window 131 at the top of the cooking cavity 11, which at least partially corresponds to the open top of the fry basket 30, the inside of the fry basket 30 can be visible, enabling users to directly view the cooking state of food in the fry basket 30, which not only allows users to cook food better and effectively improves the food cooking effect, but also increases the fun of cooking for users and effectively improves the user experience.

As shown in FIG. 1 and FIG. 2, a hot air cavity 132 with a downward opening formed by the upward depression of the air duct plate 13 is arranged at the top of the cooking cavity 11, the hot air circulation system 20 is arranged in the hot air cavity 132, and the downward opening of the hot air cavity 132 is suitable for at least partially corresponding to the open top of the fry basket 30. By setting the downward opening of the hot air cavity 132 to correspond to the open top of the fry basket 30, the circulating hot air flow generated by the hot air circulation system 20 can directly enter the fry basket 30 well, thereby heating the food in the fry basket 30, which not only can effectively improve the food cooking efficiency, but also can reduce the probability of the circulating hot air flow flowing out from the connecting gap between the sealing member 40 and the flange 31, effectively ensuring the cooking efficiency and cooking effect of the air fryer.

In an optional embodiment, a steam system communicating with the cooking cavity 11 is arranged in the body 10, the steam system comprising a steam nozzle, the steam nozzle is fixed on the air duct plate 13 and extends into the cooking cavity 11, and the steam nozzle is suitable for being arranged toward the middle of the cooking cavity 11. By arranging the steam nozzle toward the middle of the cooking cavity 11, the high-temperature water vapor flowing out of the steam nozzle can better enter the fry basket 30, thereby cooking the food in the fry basket 30 and effectively improving the cooking efficiency and cooking effect, and the high-temperature water vapor flowing out of the steam nozzle can also be reduced from flowing out of the fry basket 30 through the connection between the sealing member 40 and the flange 31, effectively ensuring the cooking efficiency and cooking effect of the food in the fry basket 30.

### Embodiment 2:

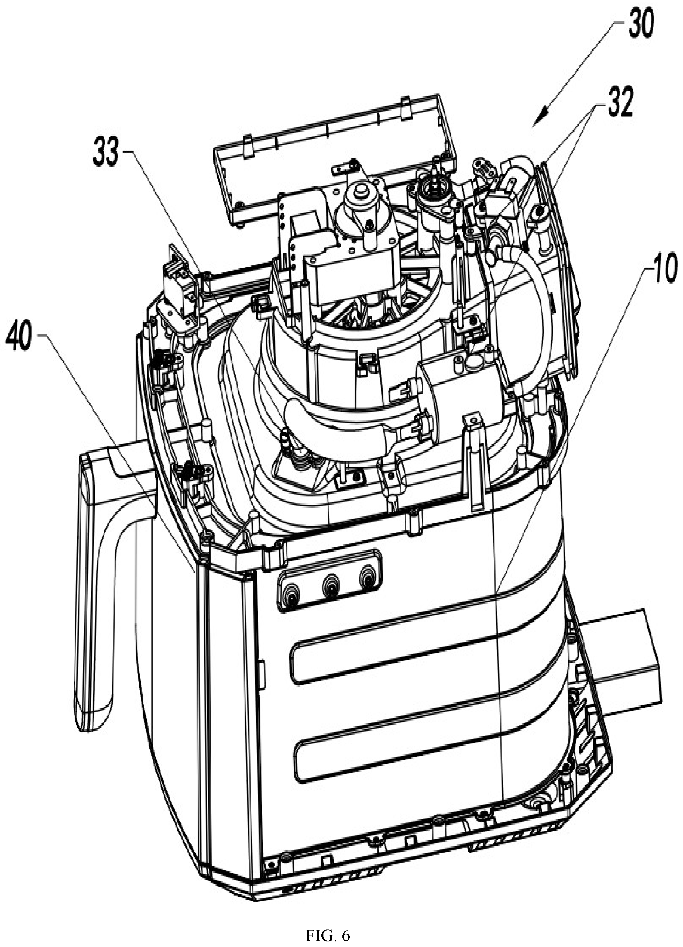

As shown in FIG. 4 to FIG. 8, which are schematic views of a second embodiment of the steam air fryer provided by the present application, the air fryer comprising a body 10, a cooking cavity 11 arranged in the body 10, and a hot air circulation system 20 and a steam system 30 communicating with the cooking cavity 11. The hot air circulation system 20 is suitable for generating circulating hot air and introducing it into the cooking cavity 11 to perform air frying cooking on the food in the cooking cavity 11; the steam system 30 is suitable for converting water into high-temperature water vapor and introducing it into the cooking cavity 11 to perform steam cooking on the food in the cooking cavity 11. By arranging the hot air circulation system 20 and the steam system 30 communicating with the cooking cavity 11 in the body respectively, the air fryer can not only realize air frying cooking, but also realize steam cooking, effectively improving the functional diversity and applicability of the air fryer.

As shown in FIG. 4 to FIG. 8, a fry basket 40 with an open top is arranged in the cooking cavity 11, a flange 41 extending outward is arranged at the periphery of the open top of the fry basket 40, an air duct plate 12 is arranged at the top of the cooking cavity 11, a sealing member 13 corresponding to the flange 41 is arranged at the periphery of the air duct plate 12, the sealing member 13 is provided with a first sealing lip 131 and a second sealing lip 132 extending downward, the first sealing lip 131 and the second sealing lip 132 are suitable for being arranged side by side and at an interval, and a gap h is formed between at least one of the first sealing lip 131 and the second sealing lip 132 and the flange 41. By arranging the first sealing lip 131 and the second sealing lip 132 which are side by side and at an interval on the sealing member 13, and arranging at least one of the first sealing lip 131 and the second sealing lip 132 at an interval from the flange 41, the sealed connection between the sealing member 13 and the flange 41 can be achieved, and friction between the sealing member 13 and the flange 41 can also be reduced, making it easier for users to disassemble and install the fry basket and effectively improving the user experience.

In an optional embodiment, the gap h preferably satisfies 0.2mm ≤ h ≤ 1mm. When the gap h between at least one of the first sealing lip 131 and the second sealing lip 132 and the flange 41 is less than 0.2mm, the first sealing lip 131 and the second sealing lip 132 are easy to rub against the fry basket 40, thus making it laborious for users to disassemble and install the fry basket 40 and resulting in a poor user experience; when the gap h between at least one of the first sealing lip 131 and the second sealing lip 132 and the flange 41 is greater than 1mm, the high-temperature water vapor in the fry basket 40 is easy to flow out of the fry basket 40 through the gap, which not only easily affects the cooking efficiency and cooking effect of food in the fry basket 40, but also easily causes high-temperature water vapor to condense at the bottom of the cooking cavity 11 to form condensed water, resulting in a poor user experience; therefore, the gap h is preferably 0.2mm - 1mm. When the gap h is 0.2mm - 1mm, the condensed water generated by steam condensation will be distributed in the gap, and the gap can be blocked under the action of water tension, thereby realizing the sealing fit between the first sealing lip 131 and the second sealing lip 132 and the flange 41. With such a design, the sealing member 13 can reduce the friction between the sealing member 13 and the flange 41 while ensuring a certain sealing performance, thus making it easier for users to disassemble and install the fry basket and effectively improving the user experience.

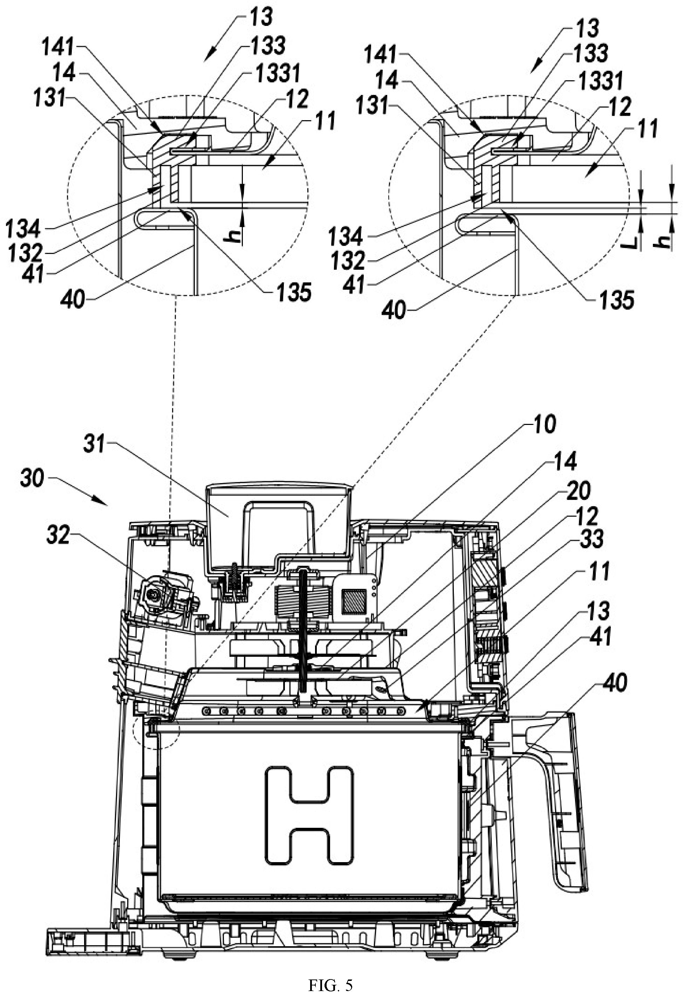

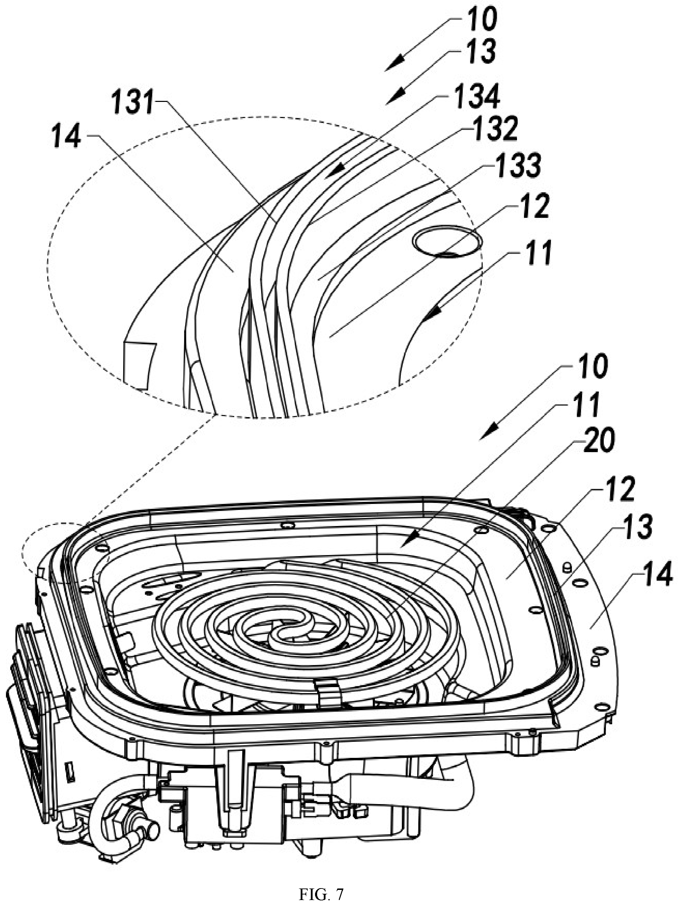

As shown in FIG. 5 and FIG. 7, the second sealing lip 132 is suitable for being located on the inner side of the first sealing lip 131, a gap L is formed between the first sealing lip 131 and the flange 41, a gap h is formed between the second sealing lip 132 and the flange 41, satisfying 0mm < L < h. By arranging the first sealing lip 131 and the second sealing lip 132 at an interval from the flange 41, and setting the interval between the first sealing lip 131 and the flange 41 to be smaller than the interval between the second sealing lip 132 and the flange 41, the friction between the first sealing lip 131 and the second sealing lip 132 and the flange 41 can be further reduced, thereby making it easier for users to disassemble and install the fry basket 40 and effectively improving the user experience.

As shown in FIG. 5 and FIG. 7, the second sealing lip 132 is suitable for being located on the inner side of the first sealing lip 131, the first sealing lip 131 is suitable for abutting against the flange 41, and a gap h is formed between the second sealing lip 132 and the flange 41. By arranging the first sealing lip 131 to abut against the flange 41 and the second sealing lip 132 to be in clearance fit with the flange 41, the sealing fit between the sealing member 13 and the flange 41 can be achieved, high-temperature water vapor in the fry basket 40 can be effectively reduced from leaking out, thereby ensuring the cooking efficiency and cooking effect of the air fryer. The gap h between the second sealing lip 132 and the flange 41 is 0.4mm - 0.6mm, and the value of the gap h is preferably 0.5mm.

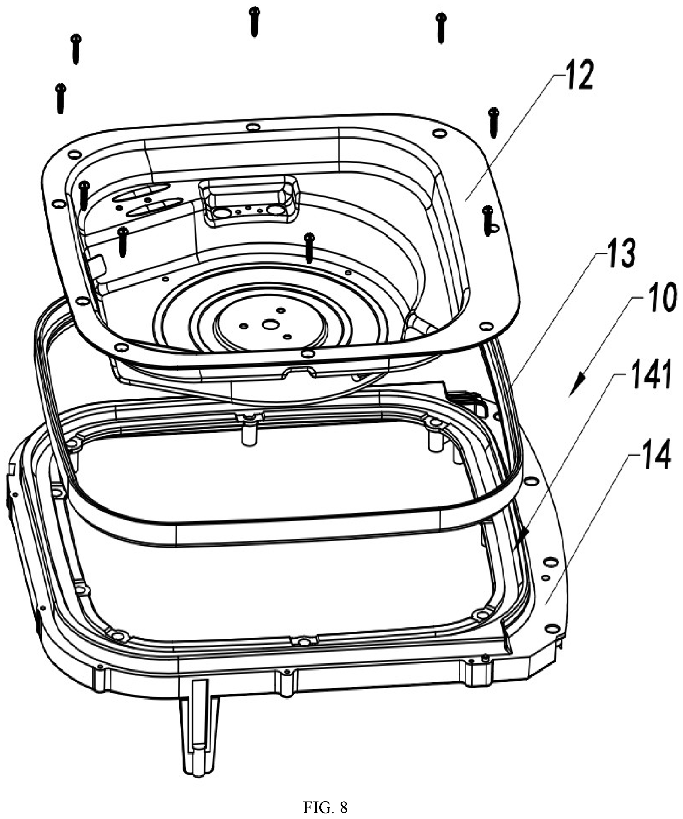

As shown in FIG. 5 and FIG. 8, the sealing member 13 comprising a main body part 133, an upper movement 14 fixedly connected with the air duct plate 12 is arranged above the air duct plate 12, and the main body part 133 is suitable for being clamped between the air duct plate 12 and the upper movement 14. By clamping the main body part 133 of the sealing member 13 between the air duct plate 12 and the upper movement 14, the installation structure of the sealing member 13 can be simplified, thereby reducing the production cost and user use cost of the air fryer, and the sealed connection between the air duct plate 12 and the upper movement 14 can also be achieved, preventing high-temperature hot air flow, water vapor and the like in the cooking cavity 11 from flowing out of the cooking cavity 11 through the connecting gap, thus avoiding affecting the normal operation of other electrical components outside the cooking cavity 11 and effectively improving the performance stability and use safety of the air fryer.

As shown in FIG. 5 and FIG. 8, an installation groove 1331 matching the thickness of the air duct plate 12 is arranged on the main body part 133, the main body part 133 is suitable for being sleeved on the periphery of the air duct plate 12 through the installation groove 1331, and a part of the outer wall of the installation groove 1331 is clamped between the air duct plate 12 and the upper movement 14. The installation groove 1331 is suitable for positioning the installation of the sealing member 13, and the installation difficulty of the sealing member 13 can be effectively reduced by positioning the installation of the sealing member 13 through the installation groove 1331, thereby reducing the production cost and user use cost of the air fryer and improving the user experience; meanwhile, the installation groove 1331 is also suitable for limiting the installation of the sealing member 13, and the random sliding of the sealing member 13 during installation, which leads to poor sealing effect or sealing failure, can be avoided by limiting the installation of the sealing member 13 through the installation groove 1331, effectively improving the sealing stability of the sealing member 13; in addition, by clamping a part of the outer wall of the installation groove 1331 between the air duct plate 12 and the upper movement 14, the sealed connection between the air duct plate 12 and the upper movement 14 can also be achieved, preventing high-temperature hot air flow, water vapor and the like in the cooking cavity 11 from flowing out of the cooking cavity 11 through the connecting gap, thus avoiding affecting the normal operation of other electrical components outside the cooking cavity 11 and effectively improving the performance stability and use safety of the air fryer.

As shown in FIG. 5, a limiting groove 141 corresponding to the main body part 133 is arranged on the upper movement 14, and at least part of the main body part 133 is limited in the limiting groove 141. The limiting groove 141 is suitable for limiting the sealing member 13. By limiting the sealing member 13 through the limiting groove 141, the random sliding of the sealing member 13 during installation, which leads to poor sealing effect or sealing failure, can be avoided, effectively ensuring the sealing stability and sealing effect of the sealing member 13.

As shown in FIG. 5, a water storage tank 134 is suitable for being formed among the first sealing lip 131, the second sealing lip 132 and the flange 41, and a communication port 135 (i.e., the gap) communicating with the inner cavity of the fry basket 40 is arranged at the bottom of the water storage tank 134. By forming the water storage tank 134 by using the first sealing lip 131, the second sealing lip 132 and the flange 41, when the air fryer is in use, the high-temperature water vapor in the fry basket 40 can enter the water storage tank 134 through the communication port 135 to condense and accumulate, thus forming a water seal, effectively improving the sealing effect of the sealing member 13, and when the fry basket 40 is disassembled, the water in the water storage tank 134 can flow into the inner cavity of the fry basket 40 through the communication port 135 under the action of the first sealing lip 131, so as to avoid condensed water from flowing out and polluting the external environment, effectively improving the user experience.

As shown in FIG. 4 to FIG. 6, the steam system 30 comprising a water tank 31 for storing water arranged on the body, a steam generating assembly 32 arranged in the body and communicating with the water tank 31, and a steam nozzle 33 communicating with the steam generating assembly 32 and at least partially extending into the cooking cavity 11. The steam generating assembly 32 is suitable for converting the water in the water tank 31 into high-temperature water vapor and conveying it to the steam nozzle 33, and the steam nozzle 33 is suitable for spraying the high-temperature water vapor into the cooking cavity 11 to perform steam cooking on the food in the cooking cavity 11; the steam nozzle 33 is suitable for being fixed on the air duct plate 12 and extending into the cooking cavity 11, and the steam nozzle 33 is suitable for being arranged toward the middle of the cooking cavity 11. By arranging the steam nozzle 33 toward the middle of the cooking cavity 11, the high-temperature water vapor flowing out of the steam nozzle 33 can better enter the fry basket 40, thereby cooking the food in the fry basket 40 and effectively improving the cooking efficiency and cooking effect, and the high-temperature water vapor flowing out of the steam nozzle 33 can also be reduced from flowing out of the fry basket 40 through the connection between the sealing member 13 and the flange 41, effectively ensuring the cooking efficiency and cooking effect of the food in the fry basket.

In an optional embodiment, guide members extending toward the side opening of the cooking cavity 11 are symmetrically arranged on the upper parts of the two side walls of the cooking cavity 11, and the fry basket 40 is suitable for being suspended on the guide members in the cooking cavity 11 through the flange 41. The guide members are suitable for guiding the installation of the fry basket 40, and the difficulty of disassembly and installation of the fry basket 40 can be effectively reduced by guiding the installation of the fry basket 40 through the guide members, improving the user use convenience; meanwhile, the guide members are suitable for limiting the installation of the fry basket 40, and the random shaking of the fry basket 40 during installation, which leads to the regional accumulation of food in the fry basket 40 and/or poor sealing between the flange 41 and the sealing member 13, thus resulting in poor cooking effect and poor user experience, can be avoided by limiting the installation of the fry basket 40 through the guide members, effectively improving the food cooking effect and user experience of the air fryer; in addition, by suspending the fry basket 40 in the cooking cavity by using the guide members, the distance between the flange 41 and the first sealing lip 131 and the second sealing lip 132 can be better controlled, effectively ensuring the sealing stability and sealing effect of the air fryer.

The above content is a further detailed description of the present application in conjunction with specific preferred embodiments, and the purpose of the present application has been fully and effectively achieved. Those skilled in the art should understand that the embodiments of the present application shown in the above description and accompanying drawings are only examples and do not limit the present application. For those of ordinary skill in the art, without departing from the present application, several simple deductions or substitutions can be made, which should all be regarded as falling within the scope of patent protection determined by the claims submitted by the present application.

### Industrial Applicability

In the present application, by arranging the sealing member corresponding to the flange at the periphery of the air duct plate and arranging the first sealing lip and the second sealing lip on the sealing member to be in sealing fit with the flange, double sealing between the air duct plate and the fry basket can be achieved, high-temperature water vapor in the fry basket can be effectively prevented from leaking out, thereby ensuring the cooking efficiency and cooking effect of the air fryer, and friction between the sealing member and the flange can also be reduced, making it easier for users to disassemble and install the fry basket and effectively improving the user experience; meanwhile, by arranging the guide grooves on the two side walls of the cooking cavity, the installation of the fry basket can be guided to reduce the installation difficulty of the fry basket and effectively improve the user experience, and the fry basket can also be limited, so that the flange of the fry basket can be better in sealing fit with the first sealing lip and the second sealing lip of the sealing member, the sealing effect between the sealing member and the flange is effectively ensured, and thus the cooking efficiency and cooking effect of the air fryer are improved.

## Claims

1. Steam air fryer, comprising a body, a cooking cavity disposed in the body and open at a side, and a hot air circulation system communicating with the cooking cavity, wherein a fry basket with an open top is detachably arranged in the cooking cavity, a flange folded outward is arranged at the periphery of the open top of the fry basket, guide grooves extending toward the side opening are arranged on two side walls of the cooking cavity, and the fry basket is suitable for being suspended in the guide grooves through the flange; an air duct plate is arranged at the top of the cooking cavity, a sealing member corresponding to the flange is arranged at the periphery of the air duct plate, the sealing member is provided with a first sealing lip extending downward and a second sealing lip extending downward, the first sealing lip and the second sealing lip are arranged side by side and at an interval, and the first sealing lip and the second sealing lip are suitable for being in sealing fit with the flange.

2. The steam air fryer according to claim 1, wherein the sealing member comprising a main body part, an upper movement fixedly connected with the air duct plate is arranged above the air duct plate, and the main body part is suitable for being clamped between the air duct plate and the upper movement.

3. The steam air fryer according to claim 2, wherein an installation groove matching the thickness of the air duct plate is arranged on the main body part, the main body part is suitable for being sleeved on the periphery of the air duct plate through the installation groove, and a part of the outer wall of the installation groove is clamped between the air duct plate and the upper movement.

4. The steam air fryer according to claim 2, wherein a limiting groove corresponding to the main body part is arranged on the upper movement, and at least part of the main body part is limited in the limiting groove.

5. The steam air fryer according to claim 2, wherein the sealing member comprising a connecting part, a connecting hole is arranged on the connecting part, a fixing hole corresponding to the connecting hole is arranged on the upper movement, and a fastener is limited in the connecting hole and the fixing hole.

6. The steam air fryer according to any one of claims 1-5, wherein a lower movement matching the upper movement is arranged below the upper movement, the sealing member comprising a connecting part, and at least part of the connecting part is clamped between the upper movement and the lower movement.

7. The steam air fryer according to claim 6, wherein a step part corresponding to the connecting part is arranged on the lower movement, a protruding part corresponding to the step part is arranged on the upper movement, and the protruding part is suitable for abutting against the step part through the connecting part.

8. The steam air fryer according to any one of claims 1-7, wherein a viewing window communicating with the cooking cavity is arranged on the air duct plate, a visual component for closing the viewing window is arranged at the viewing window, and the viewing window is suitable for at least partially corresponding to the open top of the fry basket.

9. The steam air fryer according to any one of claims 1-8, wherein a hot air cavity with a downward opening formed by an upward depression of the air duct plate is arranged at the top of the cooking cavity, the hot air circulation system is arranged in the hot air cavity, and the downward opening of the hot air cavity is suitable for at least partially corresponding to the open top of the fry basket.

10. The steam air fryer according to any one of claims 1-9, wherein a steam system communicating with the cooking cavity is arranged in the body, the steam system comprising a steam nozzle, the steam nozzle is fixed on the air duct plate and extends into the cooking cavity, and the steam nozzle is suitable for being arranged toward the middle of the cooking cavity.

11. The steam air fryer according to any one of claims 1-10, wherein further comprising a steam system communicating with the cooking cavity, wherein a gap h is formed between at least one of the first sealing lip and the second sealing lip and the flange, satisfying 0.2mm ≤ h ≤ 1mm.

12. The steam air fryer according to claim 11, wherein the second sealing lip is located on the inner side of the first sealing lip, a gap L is formed between the first sealing lip and the flange, a gap h is formed between the second sealing lip and the flange, satisfying 0mm < L < h.

13. The steam air fryer according to claim 11, wherein the second sealing lip is located on the inner side of the first sealing lip, the first sealing lip is suitable for abutting against the flange, and a gap h is formed between the second sealing lip and the flange.

14. The steam air fryer according to claim 13, wherein the gap h between the second sealing lip and the flange is 0.4mm - 0.6mm.

15. The steam air fryer according to claim 11, wherein a water storage tank is suitable for being formed among the first sealing lip, the second sealing lip and the flange, and a communication port communicating with the inner cavity of the fry basket is arranged at the bottom of the water storage tank.
